# EUROPÄISCHE PATENTSCHRIFT

(11) **EP 2 198 634 B1**
(45) Veröffentlichungstag und Bekanntmachung des Hinweises auf die Patenterteilung: **19.11.2014**
(21) Anmeldenummer: 08804538.0
(22) Anmeldetag: 22.09.2008
(51) Int. Cl.: H04W 4/00

(54) **VERFAHREN ZUR AUTONOMEN VERWALTUNG UND ZUM ZUVERLÄSSIGEN BETRIEB EINES DRAHTLOSEN SENSOR/AKTUATOR-NETZWERKS, DRAHTLOSER NETZWERKKNOTEN FÜR EIN DRAHTLOSES SENSOR/AKTUATOR-NETZWERK, SOWIE DRAHTLOSES SENSOR/AKTUATOR-NETZWERK**
METHOD FOR THE AUTONOMOUS MANAGEMENT AND THE RELIABLE OPERATION OF A WIRELESS SENSOR/ACTUATOR NETWORK, WIRELESS NETWORK NODE FOR A WIRELESS SENSOR/ACTUATOR NETWORK, AND WIRELESS SENSOR/ACTUATOR NETWORK
PROCÉDÉ DE GESTION AUTONOME ET D'EXPLOITATION FIABLE D'UN RÉSEAU SANS FIL DE CAPTEURS/ACTIONNEURS, N UD DE RÉSEAU SANS FIL POUR UN RÉSEAU SANS FIL DE CAPTEURS/ACTIONNEURS, ET RÉSEAU SANS FIL DE CAPTEURS/ACTIONNEURS

(30) Priorität: 09.10.2007 DE 102007048314
(43) Veröffentlichungstag der Anmeldung: 23.06.2010
(73) Patentinhaber: Siemens Aktiengesellschaft, 80333 München (DE)
(72) Erfinder: MEYER, Carsten, 81827 München (DE); NIEDERMEIER, Christoph, 80999 München (DE); REICHMANN, Jürgen, 81825 München (DE); ZEIDLER, Andreas, 81371 München (DE)
(86) Internationale Anmeldenummer: PCT/EP2008/062612
(87) Internationale Veröffentlichungsnummer: WO 2009/047108

(56) Entgegenhaltungen:
- US-A- 4 654 846
- US-B1- 6 633 743

## Beschreibung

Die Erfindung betrifft ein Verfahren zur autonomen Verwaltung und zum zuverlässigen Betrieb eines drahtlosen Sensor/Aktuator-Netzwerks gemäß dem Oberbegriff des Anspruchs 1, einen drahtlosen Netzwerkknoten gemäß dem Oberbegriff des Anspruchs 15, sowie ein drahtloses Sensor/Aktuator-Netzwerk gemäß dem Oberbegriff des Anspruchs 25.

In verteilten dynamischen drahtlosen Sensor/Aktuator-Netzwerken tritt im Fehlerfall typischerweise das Problem auf, dass ein Zurücksetzen eines fehlerhaft funktionierenden Netzwerkknotens, beispielsweise eines Sensorknotens, in bestimmten kritischen Fällen nur über eine direkte Interaktion vor Ort möglich ist. Das ist zum Beispiel immer dann der Fall, wenn eine Kommunikationssoftware bzw. ein Funkmodul oder eine Funkschnittstelle nicht mehr korrekt arbeiten, also bei einem Software- bzw. einem Hardwarefehler. Zudem stellt sich das Problem, derartige Zustände auf einer Applikationsebene überhaupt zu detektieren, da energieeffiziente Realisierungen von Sensor/Aktuator-Netzwerken auf klassische Fehlerdetektionsverfahren verzichten müssen, wie beispielsweise einem periodischen Versenden von so genannten Heartbeats. Ebenso können logische Fehlerzustände schwer detektierbar sein. So kann etwa ein Temperatursensor falsche Daten liefern und damit das Ergebnis verfälschen und im Extremfall sogar unbrauchbar machen. Dies ist jedoch nur im Kontext einer Anwendung erkennbar und zwar nur dann, wenn redundante Informationen oder ein sehr gutes Modell zur Plausibilitätsprüfung zur Verfügung stehen.

Derzeitige Lösung des bzw. der oben geschilderten Probleme sind:
- Eine Verwirklichung eines Fehlerdiagnose- und Reset-Mechanismus in einem Deployment Support Network (DSN) im Rahmen von Testinstallationen durch sekundäre Verdrahtung, beispielsweise über Universal Serial Bus (USB) Kabel, bzw. durch temporäre Ausstattung mit einer zweiten drahtlosen Kommunikationsschnittstelle, wie beispielsweise BTnode (ETH Zürich; http://www.btnode.ethz.ch). Der Nachteil dieses Verfahrens bzw. dieser Vorgehensweise liegt in dem zusätzlichen Aufwand und damit verbundenen Kosten für die Verkabelung. Darüber hinaus ist dieses Verfahren für einen Dauereinsatz bzw. dauerhaften Betrieb nicht geeignet.
- Einen alternativen Einsatz eines rein Hardware-basierten Verfahrens zum so genannten Remote-Reset, einem Zurücksetzen per Fernzugriff, beispielsweise über eine Funkschnittstelle ohne Software-Beteiligung. Der Nachteil derartiger Verfahren liegt in ihrer Störungsanfälligkeit. Außerdem wird das Problem einer Erkennung pathologischer Zustände nicht gelöst.
- Eine klassische Vorgehensweise, welche eine direkte Interaktion eines Technikers mit dem Sensor/Aktuator-Netzwerk bzw. den einzelnen Komponenten eines solchen Netzwerks vor Ort vorsieht.

Aus der US-Patentschrift US 4,654,846 ist ein Raumschiff-System mit einer automatischen Fehlererfassung und einer selbständigen Rekonfiguration zur Behebung des Fehlers ohne Mitwirkung einer Bodenstation bekannt.

Ferner ist aus der US-Patentschrift US 6,663,743 B1 eine Vorrichtung zur Erleichterung der Kommunikation mit einem entfernt stehenden Gerät, wobei die Kommunikation über einen so genannten Repeater, eine Endgeräteeinheit und eine Schnittstelle zum Gerät erfolgt, bekannt.

Im Sinne eines kosteneffizienten Betriebs drahtloser Sensor/Aktuator-Netzwerke ist es unerlässlich, die Häufigkeit von Vor-Ort-Wartungsvorgängen durch Anwendung geeigneter Selbstdiagnose- und -heilungsverfahren zu minimieren.

Als eine Aufgabe der Erfindung kann es deshalb angesehen werden, ein Verfahren zur autonomen Verwaltung und zum zuverlässigen Betrieb eines drahtlosen Sensor/Aktuator-Netzwerks zu entwickeln, sowie einen drahtlosen Netzwerkknoten für ein drahtloses Sensor/Aktuator-Netzwerk und ein drahtloses Sensor/Aktuator-Netzwerk.

Die Aufgabe wird gelöst durch die Merkmale des Anspruchs 1 bzw. des Anspruchs 14 bzw. des Anspruchs 23.

Ein erster Gegenstand der Erfindung betrifft demnach ein Verfahren zur autonomen Verwaltung und zum zuverlässigen Betrieb eines mindestens einen drahtlosen Netzwerkknoten umfassenden drahtlosen Sensor/Aktuator-Netzwerks, bei dem vorgesehen ist, dass jeweils ein erster und ein zweiter drahtloser Sensorknoten zumindest während einer Betriebsphase zu einem drahtlosen Netzwerkknoten in Form eines Zwillingsknotens drahtgebunden gekoppelt werden, wobei eine drahtgebundene Kopplung ein gegenseitiges zuverlässiges Zurücksetzen der drahtlosen Knoten in den jeweiligen Ausgangszustand ermöglicht bzw. zum bedarfsweisen gegenseitigen zuverlässigen Zurücksetzen der drahtlosen Sensorknoten in einen jeweiligen Ausgangszustand unabhängig vom Zustand des jeweils anderen Knotens vorgesehen ist.

Das erfindungsgemäßes Verfahren sieht somit im Wesentlichen eine drahtgebundene Kopplung jeweils zweier drahtloser Sensorknoten zu einem Zwillingsknoten, sowie ein bedarfsweises Nutzen der drahtgebundenen Kopplung zum gegenseitigen zuverlässigen Zurücksetzen der Knoten in einen jeweiligen Ausgangszustand vor.

Eine vorteilhafte Ausgestaltung des erfindungsgemäßen Verfahrens sieht vor, dass jeweils zwei räumlich nahe, vorzugsweise unmittelbar beieinander liegende drahtlose Sensorknoten zu einem Zwillingsknoten drahtgebunden gekoppelt werden.

Eine andere vorteilhafte Ausgestaltung des erfindungsgemäßen Verfahrens sieht vor, dass die beiden miteinander drahtgebunden gekoppelten drahtlosen Sensorknoten verschiedene Frequenzbereiche zur drahtlosen Kommunikation verwenden.

Eine weitere vorteilhafte Ausgestaltung des erfindungsgemäßen Verfahrens sieht vor, dass die ersten Sensorknoten und die zweiten Sensorknoten zumindest eines Zwillingsknotens zwei voneinander unabhängige drahtlose Netzwerke bilden, welche gemeinsam das drahtlose Sensor/Aktuator-Netzwerk bilden.

Eine zusätzliche vorteilhafte Ausgestaltung des erfindungsgemäßen Verfahrens sieht vor, dass die drahtgebundene Kopplung der Sensorknoten zusätzlich einer Kommunikation, beispielsweise einem Austausch von Daten beispielsweise für Diagnosezwecke und/oder einem beispielsweise externen Replikationsmechanismus beispielsweise zum Zwecke eines effizienten Datenaustauschs, und/oder vor allem bei batteriebetriebenen Sensorknoten einem Lastausgleich hinsichtlich verfügbarer Energievorräte zwischen den Sensorknoten dient.

Eine besonders vorteilhafte Ausgestaltung des erfindungsgemäßen Verfahrens sieht vor, dass die drahtgebundene Kopplung der Sensorknoten über serielle Schnittstellen der Sensorknoten hergestellt ist.

Eine zusätzliche, besonders vorteilhafte Ausgestaltung des erfindungsgemäßen Verfahrens sieht vor, dass die ersten und zweiten Sensorknoten symmetrisch konfiguriert sind, was bedeutet, dass beide Knoten die gleiche Anwendung ausführen, so dass redundante Informationen für eine Prüfung der Plausibilität von Messungen bzw. Ergebnissen vorliegen.

Eine andere, besonders vorteilhafte Ausgestaltung des erfindungsgemäßen Verfahrens sieht vor, dass die Knoten asymmetrisch konfiguriert sind, was bedeutet, dass der erste Sensorknoten eine Anwendung ausführt und der zweite Sensorknoten in einem Diagnose- und Managementmodus arbeitet.

Eine vorteilhafte Ausgestaltung des erfindungsgemäßen Verfahrens sieht vor, dass ein Update beispielsweise der Software des ersten Sensorknotens durchgeführt wird, während der zweite Sensorknoten eine Anwendung ausführt, zur Durchführung eines Updates im laufenden Betrieb. Sobald das Update des ersten Knotens erfolgreich beendet wurde, wird vorzugsweise ein Update der Software des zweiten Knotens durchgeführt.

Eine andere vorteilhafte Ausgestaltung des erfindungsgemäßen Verfahrens sieht vor, dass ein von dem mindestens einen ersten Sensorknoten mindestens eines Zwillingsknotens gebildetes drahtloses Netzwerk ein von dem mindestens einen zweiten Sensorknoten des mindestens einen Zwillingsknotens gebildetes Netzwerk verwaltet. Dabei werden die ersten Knoten durch die der Administration dienenden Kommunikation nicht beeinträchtigt.

Bei einer weiteren vorteilhaften Ausgestaltung des erfindungsgemäßen Verfahrens ist ein periodisches Vertauschen der Rollen der ersten und zweiten Sensorknoten vorgesehen. Dadurch können folgende Situationen abgedeckt werden:
- Ein Knoten stürzt ab oder hängt sich auf. Ein Zurücksetzen des Knotens über die Schnittstelle bzw. die Verbindung zwischen den Knoten durch den jeweils anderen Knoten löst dieses Problem.
- Ein Knoten liefert infolge von Hardware-Fehlern nicht-plausible Resultate. Eine redundante Ausführung der gleichen Anwendung auf beiden Knoten erlaubt eine Erkennung des Fehlers.
- Ein Knoten liefert infolge von Software-Fehlern nicht-plausible Resultate. Eine unterschiedliche Verwirklichung der Anwendung auf beiden Knoten erlaubt eine Erkennung des Fehlers.

Bei einer zusätzlichen vorteilhaften Ausgestaltung des erfindungsgemäßen Verfahrens ist eine Verringerung der Störanfälligkeit der Kommunikation durch eine Verwendung
- verschiedener Funkkanäle, wodurch eine Umgehung einer Störung auf einem ersten Funkkanal durch Übertragung auf einem zweiten Funkkanal ermöglicht wird, und/oder
- verschiedener Routing-Verfahren, wodurch durch die Verwendung alternativer Routen für die Kommunikation die Zuverlässigkeit erhöht wird, und/oder
- einer redundanten Datenübertragung, wodurch eine direkte Detektion von Datenverlusten auf der Empfängerseite ermöglicht wird,

für die beiden von den mindestens einen ersten bzw. zweiten Sensorknoten mindestens eines Zwillingsknotens gebildeten Netzwerke vorgesehen.

Eine besonders vorteilhafte Ausgestaltung des erfindungsgemäßen Verfahrens sieht vor, dass als ein Failover-Mechanismus die Funktion eines ersten Sensorknotens von einem zweiten Sensorknoten übernommen wird, sobald der erste Sensorknoten einen kritischen Zustand aufweist, beispielsweise eine zu Neige gehende Batterie oder dergleichen, zur Erhöhung der Lebensdauer des Netzwerks.

Bei einer weiteren vorteilhaften Ausgestaltung des erfindungsgemäßen Verfahrens eine geeignete Verteilung einer Anwendung auf beide gekoppelten Sensorknoten zur Zurverfügungstellung einer zumindest temporären höheren lokalen Rechenkapazität für einen bestimmten Zweck vorgesehen.

Ein zweiter Gegenstand der Erfindung betrifft einen drahtlosen Netzwerkknoten für ein drahtloses Sensor/Aktuator-Netzwerk, welcher drahtlose Netzwerkknoten als ein drahtloser Zwillingsknoten ausgeführt ist, umfassend einen ersten und einen zweiten drahtlosen Sensorknoten, welche drahtlosen Sensorknoten durch mindestens eine drahtgebundene Verbindung miteinander gekoppelt sind, wobei die drahtgebundene Verbindung insbesondere ein gegenseitiges zuverlässiges Zurücksetzen der Knoten in einen jeweiligen Ausgangszustand ermöglicht bzw. zum gegenseitigen zuverlässigen Zurücksetzen der Sensorknoten in einen jeweiligen Ausgangszustand unabhängig vom Zustand des jeweils anderen Knotens vorgesehen ist.

Eine vorteilhafte Ausgestaltung des erfindungsgemäßen drahtlosen Netzwerkknotens sieht vor, dass zwei räumlich nahe, vorzugsweise unmittelbar beieinander liegende drahtlose Sensorknoten durch die mindestens eine drahtgebundene Verbindung zu dem Zwillingsknoten miteinander gekoppelt sind.

Eine andere vorteilhafte Ausgestaltung des erfindungsgemäßen drahtlosen Netzwerkknotens sieht vor, dass die Sensorknoten jeweils über eine Funkschnittstelle verfügen, die verschiedene Frequenzbereiche zur drahtlosen Kommunikation verwenden.

Eine weitere vorteilhafte Ausgestaltung des erfindungsgemäßen drahtlosen Netzwerkknotens sieht vor, dass die Funkschnittstelle des ersten Sensorknotens und die Funkschnittstelle des zweiten Sensorknotens zumindest ein Teil von zwei voneinander unabhängigen drahtlosen Netzwerken sind, welche voneinander unabhängigen drahtlosen Netzwerke gemeinsam das drahtlose Sensor/Aktuator-Netzwerk bilden.

Eine zusätzliche vorteilhafte Ausgestaltung des erfindungsgemäßen drahtlosen Netzwerkknotens sieht vor, dass die drahtgebundene Verbindung der Sensorknoten zusätzlich einer Kommunikation, beispielsweise einem Austausch von Daten beispielsweise für Diagnosezwecke und/oder einem beispielsweise externen Replikationsmechanismus beispielsweise zum Zwecke eines effizienten Datenaustauschs, und/oder vor allem bei batteriebetriebenen Sensorknoten einem Lastausgleich hinsichtlich verfügbarer Energievorräte zwischen den Sensorknoten dient.

Eine besonders vorteilhafte Ausgestaltung des erfindungsgemäßen drahtlosen Netzwerkknotens sieht vor, dass die drahtgebundene Verbindung der Sensorknoten über serielle Schnittstellen der Sensorknoten hergestellt ist.

Eine zusätzliche, besonders vorteilhafte Ausgestaltung des erfindungsgemäßen drahtlosen Netzwerkknotens sieht vor, dass die beiden Sensorknoten des Zwillingsknotens bzw. deren Komponenten zur Verringerung der Störanfälligkeit der Kommunikation
- verschiedene Funkkanäle, wodurch eine Umgehung einer Störung auf einem ersten Funkkanal durch Übertragung auf einem zweiten Funkkanal ermöglicht wird, und/oder
- verschiedene Routing-Verfahren, wodurch durch die Verwendung alternativer Routen für die Kommunikation die Zuverlässigkeit erhöht wird, und/oder
- eine redundanten Datenübertragung, wodurch eine direkte Detektion von Datenverlusten auf der Empfängerseite ermöglicht wird,
verwenden.

Eine vorteilhafte Ausgestaltung des erfindungsgemäßen drahtlosen Netzwerkknotens sieht vor, dass die beiden Sensorknoten des Zwillingsknotens symmetrisch konfiguriert sind, was bedeutet dass beide Sensorknoten die gleiche Anwendung ausführen, so dass redundante Informationen für eine Prüfung der Plausibilität von Messungen bzw. Ergebnissen vorliegen.

Eine andere vorteilhafte Ausgestaltung des erfindungsgemäßen drahtlosen Netzwerkknotens sieht vor, dass die beiden Sensorknoten des Zwillingsknotens asymmetrisch konfiguriert sind, was bedeutet dass ein Sensorknoten eine Anwendung ausführt und der andere Sensorknoten in einem Diagnose- und Managementmodus arbeitet.

Eine zusätzliche vorteilhafte Ausgestaltung des erfindungsgemäßen drahtlosen Netzwerkknotens sieht vor, dass die beiden Sensorknoten des Zwillingsknotens derart konfiguriert sind, dass sie ihre Rollen periodisch vertauschen.

Ein dritter Gegenstand der Erfindung betrifft ein drahtloses Sensor/Aktuator-Netzwerk umfassend mindestens einen drahtlosen Netzwerkknoten. Das erfindungsgemäße drahtlose Sensor/Aktuator-Netzwerk zeichnet sich dadurch aus, dass es Mittel zur Durchführung eines oben beschriebenen erfindungsgemäßen Verfahrens zur autonomen Verwaltung und zum zuverlässigen Betrieb eines mindestens einen drahtlosen Netzwerkknoten umfassenden drahtlosen Sensor/Aktuator-Netzwerks umfasst.

Die Mittel umfassen vorzugsweise mindestens einen erfindungsgemäßen, oben beschriebenen drahtlosen Netzwerkknoten.

Eine Kernidee der Erfindung besteht in einer drahtgebundenen Kopplung bzw. Verbindung zweier vorzugsweise räumlich nahe, besonders vorzugsweise unmittelbar beieinander liegender drahtloser Sensorknoten zu einem Zwillingsknoten während der gesamten Betriebsphase, wobei die drahtgebundene Verbindung insbesondere ein gegenseitiges zuverlässiges Zurücksetzen der Knoten in den jeweiligen Ausgangszustand ermöglicht bzw. zum gegenseitigen zuverlässigen Zurücksetzen der Knoten in den jeweiligen Ausgangszustand vorgesehen ist.

Weitere Funktionen wie beispielsweise Fehlerdiagnose auf System- und Anwendungsebene sowie Bereitstellung von Redundanz hinsichtlich Energieversorgung, Sensoren, Datenverarbeitung, Datenübertragung und -weiterleitung, Datenspeicherung und Kommunikation können ebenfalls in symmetrischer Weise bereitgestellt und genutzt werden, verbunden mit den damit einhergehenden Vorteilen.

Vorteile der Erfindung gegenüber dem Stand der Technik ergeben sich unter anderem durch eine effiziente und sachgerechte Kombination der Vorteile von drahtgebundener und drahtloser Kommunikation. Die drahtgebundene Kommunikation ist zuverlässiger und mit einem geringeren Energieaufwand zu bewerkstelligen als die drahtlose, sofern die drahtgebundene Kommunikation für kürzere Entfernungen eingesetzt wird, während die drahtlose Kommunikation auf größere Entfernungen kostengünstiger ist und deutlich mehr Flexibilität im Hinblick auf adhoc Vernetzung und Mobilität der Knoten bietet. Darüber hinaus ist ein Zurücksetzen eines Sensorknotens oder von Teilen der Hardware eines Sensorknotens, etwa von Komponenten, nur über eine drahtgebundene Verbindung in allen Fällen möglich, insbesondere dann, wenn der Knoten überhaupt nicht mehr extern ansprechbar ist. Demgegenüber kommt eine generelle drahtgebundene Vernetzung aller Knoten jedoch schon aus den genannten Gründen der Kosten und Flexibilität nicht in Frage.

Weitere Vorteile der Erfindung gegenüber dem Stand der Technik ergeben sich dadurch, dass eine deutlich höhere Betriebssicherheit bei gleichzeitiger Kosteneffizienz infolge eines verringerten Wartungsaufwands erreicht wird. Außerdem ermöglicht die Erfindung eine Unterstützung für eine autonome Fehlererkennung und -korrektur. Mit der Erfindung lässt sich darüber hinaus eine höhere Energieeffizienz durch Entfall einer periodischen Kommunikation zur Feststellung der Betriebsfähigkeit, beispielsweise in Form von Heartbeats, erreichen. Die Erfindung erlaubt des weiteren ein Updaten eines Knotens im laufenden Betrieb ohne Ausfallzeiten und damit ohne Beeinträchtigung einer auf dem oder im Netzwerk ausgeführten bzw. laufenden Anwendung, eine flexible Einsetzbarkeit für unterschiedliche Betriebsarten, sowie eine redundante Verfügbarkeit verschiedener Funktionen und/oder Ressourcen.

Ein Ausführungsbeispiel der Erfindung ist in der Zeichnung dargestellt und wird im Folgenden näher erläutert. Es zeigen:
- Fig. 1: eine schematische Darstellung eines Zwillingsknotens;
- Fig. 2: eine schematische Darstellung eines Sensor/Aktuator-Netzwerks.

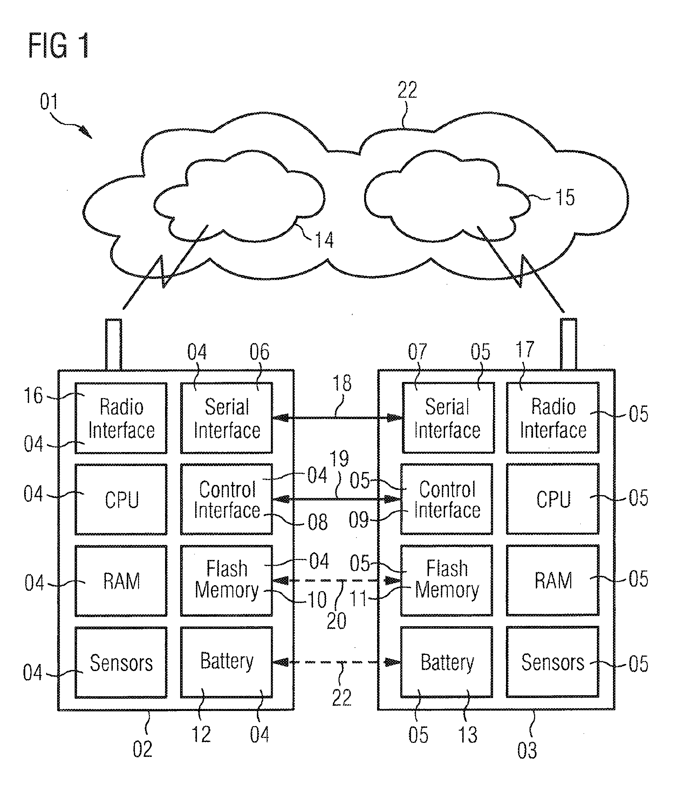

Fig. 1 zeigt einen erfindungsgemäßen drahtlosen Netzwerkknoten 01 in Form eines drahtlosen Zwillingsknotens 01. Der drahtlose Zwillingsknoten 01 besteht aus zwei gekoppelten drahtlosen Sensorknoten 02, 03, die sich jeweils aus den gleichen Komponenten 04, 05 zusammensetzen. Erfindungsgemäß ist dabei eine drahtgebundene Kopplung der Knoten 02, 03 vorgesehen, vorzugsweise über deren serielle Schnittstellen 06, 07. Die so hergestellte vorzugsweise serielle Verbindung 18 dient beispielsweise dem drahtgebundenen Austausch von Daten für Diagnosezwecke. Zusätzlich sind beide Knoten 02, 03 über jeweils eine Kontrollschnittstelle 08, 09 verbunden. Die drahtgebundene Verbindung 19 zwischen den Kontrollschnittstellen 08, 09 erlaubt ein Zurücksetzen eines ersten Knotens 02 bzw. 03 durch einen zweiten Knoten 03 bzw. 02 unabhängig vom Zustand des ersten Knotens 02 bzw. 03. Weiterhin kann eine drahtgebundene Verbindung 20 der Flash-Speicher 10, 11 der beiden Knoten 02, 03 über einen externen Replikationsmechanismus zum Zwecke eines effizienten Datenaustauschs vorgesehen sein. Um bei batteriebetriebenen Sensorknoten 02, 03 einen Lastausgleich hinsichtlich der verfügbaren Energievorräte bewerkstelligen zu können, ist ferner eine drahtgebundene Kopplung 21 der Batterien 12, 13 der beiden Knoten 02, 03 denkbar. Die Knoten 02, 03 können jedoch auch anders als mittels Batterien 12, 13 mit Energie versorgt werden. Der Begriff Batterie umfasst hierbei jegliche Art von Energiespeichern und -quellen, wie beispielsweise Trockenbatterien, wiederaufladbare Akkumulatoren, Solarzellen bzw. photovoltaische Zellen, thermoelektrische Wandler, Brennstoffzellen sowie zugehörige Brennstoff- und/oder Oxidatorspeicher, Kondensatoren, um nur einige denkbare Energiespeicher- und -quellen zu nennen.

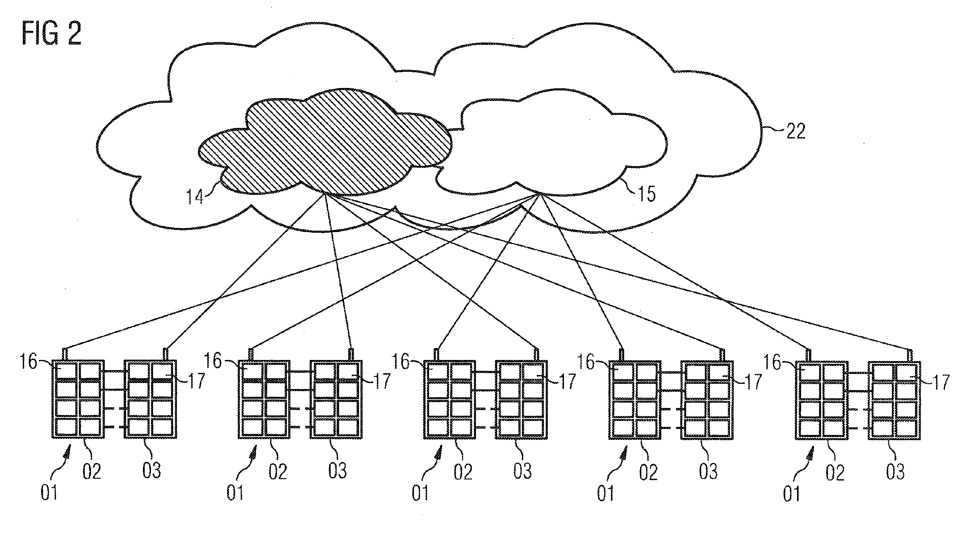

Der drahtlosen Knoten 02 des drahtlosen Zwillingsknotens 01 ist dabei Teil eines ersten drahtlosen Netzwerks 14, wohingegen der Knoten 03 des Zwillingsknotens 01 Teil eines zweiten drahtlosen Netzwerks 15 ist (vgl. Fig. 2). Beide drahtlose Netzwerke 14, 15 bilden gemeinsam ein drahtloses Sensor/Aktuator-Netzwerk 22.

Die Funkschnittstellen 16, 17 der Sensorknoten 02, 03 mehrerer Zwillingsknoten 01 werden erfindungsgemäß so konfiguriert, dass sie verschiedene Frequenzbereiche zur drahtlosen Kommunikation verwenden. Dadurch wird eine Trennung der jeweils angebundenen Sensorknoten 02, 03 in zwei in Fig. 2 dargestellte, voneinander unabhängige drahtlose Netzwerke 14, 15 erreicht, welche gemeinsam das Sensor/Aktuator-Netzwerk 22 bilden.

Eine Grundidee der Erfindung besteht in einer dauerhaften Kopplung zweier gleichartiger Sensorknoten 02, 03 über eine geeignete zuverlässige Datenverbindung 18, 19, beispielsweise über eine serielle Schnittstelle 06, 07, wobei die Datenverbindung 18, 19 ein gegenseitiges Zurücksetzen des einen Knotens 02 bzw. 03 durch den jeweils anderen Knoten 03 bzw. 02 unterstützt. Die Verbindung 18 ist so beschaffen, dass sie im Normalzustand, also im laufenden Betrieb, eine Kommunikation der beiden Knoten 02, 03 ermöglicht, während ein Zurücksetzen völlig unabhängig vom Zustand des anderen Knotens 02, 03 über die Verbindung 19 möglich ist. Die Kommunikation der beiden Knoten 02, 03 im Normalzustand dient insbesondere einer Diagnose des Zustandes eines Knotens 02 bzw. 03 durch den anderen Knoten 03 bzw. 02.

Je nach Anwendungsfall können die Knoten 02, 03 entweder:
- symmetrisch konfiguriert sein, was bedeutet, beide Knoten 02, 03 führen die gleiche Anwendung aus, so dass redundante Informationen für eine Prüfung der Plausibilität von Messungen bzw. Ergebnissen vorliegen;
- asymmetrisch konfiguriert sein, was bedeutet, ein Knoten 02 bzw. 03 führt eine Anwendung aus und der andere Knoten 03 bzw. 02 arbeitet in einem Diagnose- und Managementmodus.

Ebenso ist eine Kombination der beiden Konfigurationen bzw. Verfahren auf logischer oder physikalischer Ebene denkbar, beispielsweise durch periodisches Vertauschen der Rollen oder Erhöhung der Redundanz durch Doppeln der Paare.

Das oben beschriebene Verfahren bzw. der drahtlose Zwillingsknoten zur Durchführung eines solchen Verfahrens ermöglicht die Lösung der nachfolgend aufgezählten Problemfälle bzw. die Verwirklichung der nachfolgend aufgezählten Funktionalitäten mit den damit verbundenen Vorteilen.
A) Eine symmetrische oder asymmetrische Watchdog-Funktionalität, wobei ein erster Knoten 02 bzw. 03 einen zweiten Knoten 03 bzw. 02 überwacht, während der zweite Knoten 03 bzw. 02 eine Anwendung ausführt. Im symmetrischen Fall tauschen sie anschließend die Rollen, d.h. der zweite Knoten 03 bzw. 02 überwacht den ersten 02, bzw. 03. Im Fall eines Auftretens eines Fehlers werden geeignete Maßnahmen getroffen. Dadurch können folgende Situationen abgedeckt werden:
   - Ein Knoten 02, 03 stürzt ab oder hängt sich auf. Ein Zurücksetzen des Knotens 02 bzw. 03 über die Schnittstelle 04, 05 bzw. die Verbindung 19 zwischen den Knoten 02, 03 durch den jeweils anderen Knoten 03 bzw. 02 löst dieses Problem.
   - Ein Knoten 02, 03 liefert infolge von Hardware-Fehlern nicht-plausible Resultate. Eine redundante Ausführung der gleichen Anwendung auf beiden Knoten 02, 03 erlaubt eine Erkennung des Fehlers.
   - Ein Knoten 02, 03 liefert infolge von Software-Fehlern nicht-plausible Resultate. Eine unterschiedliche Verwirklichung der Anwendung auf beiden Knoten 02, 03 erlaubt eine Erkennung des Fehlers.
B) Ein Software-Update im laufenden Betrieb, wobei ein Update der Software des ersten Knotens 02 bzw. 03 durchgeführt wird, während der zweite Knoten 03 bzw. 02 die Anwendung ausführt. Sobald das Update des ersten Knotens 02 bzw. 03 erfolgreich beendet wurde, wird ein Update der Software des zweiten Knotens 03 bzw. 02 durchgeführt.
C) Eine Administration eines aus ersten Knoten 02 mehrerer Zwillingsknoten 01 gebildeten Netzwerks 14 über ein aus den zweiten Knoten 03 mehrerer Zwillingsknoten 01 gebildetes Netzwerk 15. Dabei werden die ersten Knoten 02 durch die der Administration dienenden Kommunikation nicht beeinträchtigt.
D) Eine Verringerung der Störanfälligkeit der Kommunikation durch eine Verwendung:
   - verschiedener Funkkanäle, wodurch eine Umgehung einer Störung auf einem ersten Funkkanal durch Übertragung auf einem zweiten Funkkanal ermöglicht wird,
   - verschiedener Routing-Verfahren, wodurch durch die Verwendung alternativer Routen für die Kommunikation die Zuverlässigkeit erhöht wird,
   - einer redundanten Datenübertragung, wodurch eine direkte Detektion von Datenverlusten auf der Empfängerseite ermöglicht wird.
E) Eine Erhöhung der Lebensdauer des drahtlosen Sensor/Aktuator-Netzwerks 22 durch einen Failover-Mechanismus, bei dem die Funktionalität eines ersten Knotens 02 bzw. 03 von einem zweiten Knoten 03 bzw. 02 übernommen wird, sobald der erste Knoten 02 bzw. 03 einen kritischen Zustand aufweist, beispielsweise eine zu Neige gehende Batterie oder dergleichen.
F) Eine zumindest temporäre höhere lokale Rechenkapazität für bestimmte Zwecke durch eine geeignete Verteilung einer Anwendung auf beide gekoppelten Knoten 02, 03. Dabei ist denkbar, dass wenn solche bestimmte Zwecke im Dauerbetrieb häufiger vorkommen, einen der beiden Knoten 02, 03 besser auszustatten.

## Patentansprüche

1. Verfahren zur autonomen Verwaltung und zum Betrieb eines mindestens einen drahtlosen Netzwerkknoten (01) umfassenden drahtlosen Sensor/Aktuator-Netzwerks (22),
wobei
jeweils ein erster und ein zweiter drahtloser Sensorknoten (02, 03) zu einem drahtlosen Netzwerkknoten (01) in Form eines Zwillingsknotens (01) drahtgebunden gekoppelt werden, wobei eine drahtgebundene Kopplung (19) zum gegenseitigen Zurücksetzen der drahtlosen Sensorknoten (02, 03) in einen jeweiligen Ausgangszustand vorgesehen ist, **dadurch gekennzeichnet,**
**dass** die beiden miteinander drahtgebunden gekoppelten drahtlosen Sensorknoten (02, 03) verschiedene Frequenzbereiche zur drahtlosen Kommunikation verwenden.

2. Verfahren nach Anspruch 1,
**dadurch gekennzeichnet,**
**dass** jeweils zwei räumlich nahe beieinander liegende drahtlose Sensorknoten (02, 03) zu einem Zwillingsknoten (01) drahtgebunden gekoppelt werden.

3. Verfahren nach Anspruch 1,
**dadurch gekennzeichnet,**
**dass** die ersten Sensorknoten (02) und die zweiten Sensorknoten (03) zumindest eines Zwillingsknotens (01) zwei voneinander unabhängige drahtlose Netzwerke (14, 15) bilden, welche gemeinsam das drahtlose Sensor/Aktuator-Netzwerk (22) bilden.

4. Verfahren nach einem der vorhergehenden Ansprüche,
**dadurch gekennzeichnet,**
**dass** die drahtgebundene Kopplung (18, 20, 21) der Sensorknoten (02, 03) zusätzlich einer Kommunikation und/oder einem Replikationsmechanismus, und/oder einem Lastausgleich hinsichtlich verfügbarer Energievorräte zwischen den Sensorknoten (02, 03) dient.

5. Verfahren nach einem der vorhergehenden Ansprüche,
**dadurch gekennzeichnet,**
**dass** die drahtgebundene Kopplung (18, 19, 20, 21) der Sensorknoten (02, 03) über serielle Schnittstellen (06, 07, 08, 09, 10, 11, 12, 13) der Sensorknoten (02, 03) hergestellt ist.

6. Verfahren nach einem der vorhergehenden Ansprüche,
**dadurch gekennzeichnet,**
**dass** die ersten und zweiten Sensorknoten (02, 03) die gleiche Anwendung ausführen.

7. Verfahren nach einem der Ansprüche 1 bis 5,
**dadurch gekennzeichnet,**
**dass** der erste Sensorknoten (02, 03) eine Anwendung ausführt und der zweite Sensorknoten (03, 02) in einem Diagnose- und Managementmodus arbeitet.

8. Verfahren nach einem der Ansprüche 1 bis 5,
**dadurch gekennzeichnet,**
**dass** ein Update des ersten Sensorknotens (02, 03) durchgeführt wird, während der zweite Sensorknoten (03, 02) eine Anwendung ausführt.

9. Verfahren nach einem der Ansprüche 1 bis 5,
**dadurch gekennzeichnet,**
**dass** ein von dem mindestens einen ersten Sensorknoten (02, 03) mindestens eines Zwillingsknotens (01) gebildetes drahtloses Netzwerk (14, 15) ein von dem mindestens einen zweiten Sensorknoten (03, 02) des mindestens einen Zwillingsknotens (01) gebildetes Netzwerk (15, 14) verwaltet.

10. Verfahren nach einem der Ansprüche 6 bis 9,
**gekennzeichnet durch**
ein periodisches Vertauschen der Rollen der ersten und zweiten Sensorknoten (02, 03).

11. Verfahren nach einem der vorhergehenden Ansprüche,
**gekennzeichnet durch**
eine Verwendung
- verschiedener Funkkanäle und/oder
- verschiedener Routing-Verfahren und/oder
- einer redundanten Datenübertragung
für die beiden von den mindestens einen ersten bzw. zweiten Sensorknoten (02, 03) mindestens eines Zwillingsknotens (01) gebildeten Netzwerke (14, 15).

12. Verfahren nach einem der vorhergehenden Ansprüche,
**dadurch gekennzeichnet,**
**dass** die Funktion eines ersten Sensorknotens (02, 03) von einem zweiten Sensorknoten (03, 02) übernommen wird, sobald der erste Sensorknoten (02, 03) einen kritischen Zustand aufweist.

13. Verfahren nach einem der vorhergehenden Ansprüche,
**gekennzeichnet durch**
eine Verteilung einer Anwendung auf beide gekoppelten Sensorknoten (02, 03).

14. Drahtloser Netzwerkknoten (01) für ein drahtloses Sensor/Aktuator-Netzwerk (22),
wobei
der drahtlose Netzwerkknoten (01) als ein drahtloser Zwillingsknoten (01) ausgeführt ist, umfassend einen ersten und einen zweiten drahtlosen Sensorknoten (02, 03), welche durch mindestens eine drahtgebundene Verbindung (19) miteinander gekoppelt sind, wobei die drahtgebundene Verbindung (19) zum gegenseitigen Zurücksetzen der Sensorknoten (02, 03)in einen jeweiligen Ausgangszustand vorgesehen ist, **dadurch gekennzeichnet, dass** die Sensorknoten (02, 03) jeweils über eine Funkschnittstelle (16, 17) verfügen, die verschiedene Frequenzbereiche zur drahtlosen Kommunikation verwenden.

15. Drahtloser Netzwerkknoten nach Anspruch 14,
**dadurch gekennzeichnet,**
**dass** zwei räumlich nahe beieinander liegende drahtlose Sensorknoten (02, 03) durch die mindestens eine drahtgebundene Verbindung (19) zu dem Zwillingsknoten (01) miteinander gekoppelt sind.

16. Drahtloser Netzwerkknoten nach Anspruch 14,
**dadurch gekennzeichnet,**
**dass** die Funkschnittstelle (16) des ersten Sensorknotens (02) und die Funkschnittstelle (17) des zweiten Sensorknotens (03) zumindest ein Teil von zwei voneinander unabhängigen drahtlosen Netzwerken (14, 15) sind, welche gemeinsam das drahtlose Sensor/Aktuator-Netzwerk (22) bilden.

17. Drahtloser Netzwerkknoten nach einem der Ansprüche 14 bis 16,
**dadurch gekennzeichnet,**
**dass** die drahtgebundene Verbindung (18, 20, 21) der Sensorknoten (02, 03) zusätzlich einer Kommunikation und/oder einem Replikationsmechanismus und/oder einem Lastausgleich hinsichtlich verfügbarer Energievorräte zwischen den Sensorknoten (02, 03) dient.

18. Drahtloser Netzwerkknoten nach einem der Ansprüche 14 bis 17,
**dadurch gekennzeichnet,**
**dass** die drahtgebundene Verbindung (18, 19, 20, 21) der Sensorknoten (02, 03) über serielle Schnittstellen (06, 07, 08, 09, 10, 11, 12, 13) der Sensorknoten (02, 03) hergestellt ist.

19. Drahtloser Netzwerkknoten nach einem der Ansprüche 14 bis 18,
**dadurch gekennzeichnet,**
**dass** die beiden Sensorknoten (02, 03) des Zwillingsknotens (01)
- verschiedene Funkkanäle und/oder
- verschiedene Routing-Verfahren und/oder
- eine redundanten Datenübertragung
verwenden.

20. Drahtloser Netzwerkknoten nach einem der Ansprüche 14 bis 19,
**dadurch gekennzeichnet,**
**dass** die beiden Sensorknoten (02, 03) des Zwillingsknotens (01) symmetrisch konfiguriert sind.

21. Drahtloser Netzwerkknoten nach einem der Ansprüche 14 bis 20,
**dadurch gekennzeichnet,**
**dass** die beiden Sensorknoten (02, 03) des Zwillingsknotens (01) asymmetrisch konfiguriert sind.

22. Drahtloser Netzwerkknoten nach Anspruche 20 oder 21,
**dadurch gekennzeichnet,**
**dass** die beiden Sensorknoten (02, 03) des Zwillingsknotens (01) derart konfiguriert sind, dass sie ihre Rollen periodisch vertauschen.

23. Drahtloses Sensor/Aktuator-Netzwerk (22), umfassend mindestens einen drahtlosen Netzwerkknoten (01),
**gekennzeichnet durch**
Mittel (01, 02, 03) zur Durchführung eines Verfahrens nach einem der Ansprüche 1 bis 13.

24. Drahtloses Sensor/Aktuator-Netzwerk,
**dadurch gekennzeichnet,**
**dass** die Mittel (01, 02, 03) mindestens einen drahtlosen Netzwerkknoten (01) nach einem der Ansprüche 14 bis 22 umfassen.

## Claims

1. Method for autonomously managing and operating a wireless sensor/actuator network (22) comprising at least one wireless network node (01),
a first and a second wireless sensor node (02, 03) each being coupled in a wired manner to form a wireless network node (01) in the form of a twin node (01),
wired coupling (19) being provided for the purpose of mutually resetting the wireless sensor nodes (02, 03) to a respective initial state,
**characterized in that** the two wireless sensor nodes (02, 03) coupled to one another in a wired manner use different frequency ranges for wireless communication.

2. Method according to Claim 1,
**characterized in that**
two wireless sensor nodes (02, 03) which are spatially close to each other are each coupled in a wired manner to form a twin node (01).

3. Method according to Claim 1,
**characterized in that**
the first sensor nodes (02) and the second sensor nodes (03) of at least one twin node (01) form two independent wireless networks (14, 15) which together form the wireless sensor/actuator network (22).

4. Method according to one of the preceding claims,
**characterized in that**
the wired coupling (18, 20, 21) of the sensor nodes (02, 03) is additionally used for communication and/or for a replication mechanism and/or for load balancing with respect to available energy reserves between the sensor nodes (02, 03).

5. Method according to one of the preceding claims,
**characterized in that**
the wired coupling (18, 19, 20, 21) of the sensor nodes (02, 03) is produced via serial interfaces (06, 07, 08, 09, 10, 11, 12, 13) of the sensor nodes (02, 03).

6. Method according to one of the preceding claims,
**characterized in that**
the first and second sensor nodes (02, 03) execute the same application.

7. Method according to one of Claims 1 to 5,
**characterized in that**
the first sensor node (02, 03) executes an application and the second sensor node (03, 02) operates in a diagnostic and management mode.

8. Method according to one of Claims 1 to 5,
**characterized in that**
the first sensor node (02, 03) is updated while the second sensor node (03, 02) executes an application.

9. Method according to one of Claims 1 to 5,
**characterized in that**
a wireless network (14, 15) formed by the at least one first sensor node (02, 03) of at least one twin node (01) manages a network (15, 14) formed by the at least one second sensor node (03, 02) of the at least one twin node (01).

10. Method according to one of Claims 6 to 9,
**characterized by**
periodic swapping of the roles of the first and second sensor nodes (02, 03).

11. Method according to one of the preceding claims, **characterized by**
use
- of different radio channels and/or
- of different routing methods and/or
- of redundant data transmission
for the two networks (14, 15) formed by the at least one first or second sensor node (02, 03) of at least one twin node (01).

12. Method according to one of the preceding claims,
**characterized in that**
the function of a first sensor node (02, 03) is undertaken by a second sensor node (03, 02) as soon as the first sensor node (02, 03) has a critical state.

13. Method according to one of the preceding claims,
**characterized by**
distribution of an application to both coupled sensor nodes (02, 03).

14. Wireless network node (01) for a wireless sensor/actuator network (22),
the wireless network node (01) being in the form of a wireless twin node (01) comprising a first and a second wireless sensor node (02, 03) which are coupled to one another by means of at least one wired connection (19), the wired connection (19) being provided for the purpose of mutually resetting the sensor nodes (02, 03) to a respective initial state, **characterized in that** the sensor nodes (02, 03) each have a radio interface (16, 17), which interfaces use different frequency ranges for wireless communication.

15. Wireless network node according to Claim 14,
**characterized in that**
two wireless sensor nodes (02, 03) which are spatially close to each other are coupled to one another to form the twin node (01) by means of the at least one wired connection (19).

16. Wireless network node according to Claim 14,
**characterized in that**
the radio interface (16) of the first sensor node (02) and the radio interface (17) of the second sensor node (03) are at least part of two independent wireless networks (14, 15) which together form the wireless sensor/actuator network (22).

17. Wireless network node according to one of Claims 14 to 16,
**characterized in that**
the wired connection (18, 20, 21) of the sensor nodes (02, 03) is additionally used for communication and/or for a replication mechanism and/or for load balancing with respect to available energy reserves between the sensor nodes (02, 03).

18. Wireless network node according to one of Claims 14 to 17,
**characterized in that**
the wireless connection (18, 19, 20, 21) of the sensor nodes (02, 03) is produced via serial interfaces (06, 07, 08, 09, 10, 11, 12, 13) of the sensor nodes (02, 03).

19. Wireless network node according to one of Claims 14 to 18,
**characterized in that**
the two sensor nodes (02, 03) of the twin node (01) use
- different radio channels and/or
- different routing methods and/or
- redundant data transmission.

20. Wireless network node according to one of Claims 14 to 19,
**characterized in that**
the two sensor nodes (02, 03) of the twin node (01) are configured symmetrically.

21. Wireless network node according to one of Claims 14 to 20,
**characterized in that**
the two sensor nodes (02, 03) of the twin node (01) are configured asymmetrically.

22. Wireless network node according to Claim 20 or 21,
**characterized in that**
the two sensor nodes (02, 03) of the twin node (01) are configured in such a manner that they periodically swap their roles.

23. Wireless sensor/actuator network (22) comprising at least one wireless network node (01),
**characterized by**
means (01, 02, 03) for carrying out a method according to one of Claims 1 to 13.

24. Wireless sensor/actuator network,
**characterized in that**
the means (01, 02, 03) comprise at least one wireless network node (01) according to one of Claims 14 to 22.

## Revendications

1. Procédé de gestion autonome et d'exploitation d'un réseau sans fil de capteurs/actionneurs (22) comprenant au moins un noeud de réseau sans fil (01), respectivement un premier et un deuxième noeud capteur sans fil (02, 03) étant couplés par fil pour donner un noeud de réseau sans fil (01) se présentant sous la forme d'un noeud jumelé (01), un couplage filaire (19) étant prévu pour la remise réciproque des noeuds capteur sans fil (02, 03) dans un état initial respectif, **caractérisé en ce que** les deux noeuds capteur sans fil (02, 03) couplés entre eux par fil utilisent différentes plages de fréquences pour la communication sans fil.

2. Procédé selon la revendication 1, **caractérisé en ce que** respectivement deux noeuds capteur sans fil (02, 03) proches l'un de l'autre dans l'espace sont couplés par fil pour donner un noeud jumelé (01).

3. Procédé selon la revendication 1, **caractérisé en ce que** les premiers noeuds capteur (02) et les deuxièmes noeuds capteur (03) forment au moins un noeud jumelé (01) de deux réseaux sans fils indépendants l'un de l'autre (14, 15) et qui forment ensemble le réseau sans fil de capteurs/actionneurs (22).

4. Procédé selon l'une des revendications précédentes, **caractérisé en ce que** le couplage filaire (18, 20, 21) des noeuds capteur (02, 03) sert en outre à une communication et/ou à un mécanisme de réplication et/ou à un équilibre des charges en ce qui concerne des réserves d'énergie disponibles entre les noeuds capteur (02, 03).

5. Procédé selon l'une des revendications précédentes, **caractérisé en ce que** le couplage filaire (18, 19, 20, 21) des noeuds capteur (02, 03) est réalisé via des interfaces séries (06, 07, 08, 09, 10, 11, 12, 13) des noeuds capteur (02, 03).

6. Procédé selon l'une des revendications précédentes, **caractérisé en ce que** les premiers et deuxièmes noeuds capteur (02, 03) exécutent la même application.

7. Procédé selon l'une des revendications 1 à 5, **caractérisé en ce que** le premier noeud capteur (02, 03) exécute une application et le deuxième noeud capteur (03, 02) fonctionne dans un mode de diagnostic et de gestion.

8. Procédé selon l'une des revendications 1 à 5, **caractérisé en ce qu'**une mise à jour du premier noeud capteur (02, 03) est effectuée pendant que le deuxième noeud capteur (03, 02) exécute une application.

9. Procédé selon l'une des revendications 1 à 5, **caractérisé en ce qu'**un réseau sans fil (14, 15) formé par l'au moins un premier noeud capteur (02, 03) d'au moins un noeud jumelé (01) gère un réseau (15, 14) formé par l'au moins un deuxième noeud capteur (03, 02) de l'au moins un noeud jumelé (01).

10. Procédé selon l'une des revendications 6 à 9, **caractérisé par** une permutation périodique des rôles des premier et deuxième noeuds capteur (02, 03).

11. Procédé selon l'une des revendications précédentes, **caractérisé par** une utilisation de
- différents canaux radio et/ou
- différents procédés de routage et/ou
- une transmission de données redondante pour les deux réseaux (14, 15) formés par l'au moins un premier resp. deuxième noeud capteur (02, 03) d'au moins un noeud jumelé (01).

12. Procédé selon l'une des revendications précédentes, **caractérisé en ce que** la fonction d'un premier noeud capteur (02, 03) est prise en charge par un deuxième noeud capteur (03, 02) dès que le premier noeud capteur (02, 03) présente un état critique.

13. Procédé selon l'une des revendications précédentes, **caractérisé par** une répartition d'une application sur les deux noeuds capteur couplés (02, 03).

14. Noeud de réseau sans fil (01) pour un réseau sans fil de capteurs/actionneurs (22), le noeud de réseau sans fil (01) étant réalisé en tant que noeud jumelé sans fil (01), comprenant un premier et un deuxième noeud capteur sans fil (02, 03) qui sont couplés entre eux par au moins une liaison filaire (19), la liaison filaire (19) étant prévue pour la remise réciproque des noeuds capteur (02, 03) dans un état initial respectif, **caractérisé en ce que** les noeuds capteur (02, 03) disposent respectivement d'une interface radio (16, 17) qui utilisent différentes plages de fréquences pour la communication sans fil.

15. Noeud de réseau sans fil selon la revendication 14, **caractérisé en ce que** deux noeuds capteur sans fil (02, 03) proches l'un de l'autre dans l'espace sont couplés entre eux par l'au moins une liaison filaire (19) pour donner le noeud jumelé (01).

16. Noeud de réseau sans fil selon la revendication 14, **caractérisé en ce que** l'interface radio (16) du premier noeud capteur (02) et l'interface radio (17) du deuxième noeud capteur (03) forment au moins une partie de deux réseaux sans fil (14, 15) indépendants l'un de l'autre et qui forment ensemble le réseau sans fil de capteurs/actionneurs (22).

17. Noeud de réseau sans fil selon l'une des revendications 14 à 16, **caractérisé en ce que** le couplage filaire (18, 20, 21) des noeuds capteur (02, 03) sert en outre à une communication et/ou à un mécanisme de réplication et/ou à un équilibre des charges en ce qui concerne des réserves d'énergie disponibles entre les noeuds capteur (02, 03).

18. Noeud de réseau sans fil selon l'une des revendications 14 à 17, **caractérisé en ce que** le couplage filaire (18, 19, 20, 21) des noeuds capteur (02, 03) est réalisé via des interfaces séries (06, 07, 08, 09, 10, 11, 12, 13) des noeuds capteur (02, 03).

19. Noeud de réseau sans fil selon l'une des revendications 14 à 18, **caractérisé en ce que** les deux noeuds capteur (02, 03) du noeud jumelé (01) utilisent
- différents canaux radio et/ou
- différents procédés de routage et/ou
- une transmission de données redondante.

20. Noeud de réseau sans fil selon l'une des revendications 14 à 19, **caractérisé en ce que** les deux noeuds capteur (02, 03) du noeud jumelé (01) sont configurés de manière symétrique.

21. Noeud de réseau sans fil selon l'une des revendications 14 à 20, **caractérisé en ce que** les deux noeuds capteur (02, 03) du noeud jumelé (01) sont configurés de manière asymétrique.

22. Noeud de réseau sans fil selon la revendication 20 ou 21, **caractérisé en ce que** les deux noeuds capteur (02, 03) du noeud jumelé (01) sont configurés de manière telle qu'ils permutent périodiquement leurs rôles.

23. Réseau sans fil de capteurs/actionneurs (22), comprenant au moins un noeud de réseau sans fil (01), **caractérisé par** des moyens (01, 02, 03) permettant d'exécuter un procédé selon l'une des revendications 1 à 13.

24. Réseau sans fil de capteurs/actionneurs, **caractérisé en ce que** les moyens (01, 02, 03) comprennent au moins un noeud de réseau sans fil (01) selon l'une des revendications 14 à 22.
